# EUROPÄISCHE PATENTSCHRIFT

(11) **EP 1 727 976 B1**
(45) Veröffentlichungstag und Bekanntmachung des Hinweises auf die Patenterteilung: **15.10.2008**
(21) Anmeldenummer: 05729076.9
(22) Anmeldetag: 04.03.2005
(51) Int. Cl.: F02M 25/028, F02M 31/10, F02B 29/04, F01P 3/20

(54) **BRENNKRAFTMASCHINE MIT BEFEUCHTUNGSEINRICHTUNG UND WÄRMETAUSCHER**
INTERNAL COMBUSTION ENGINE HAVING A HUMIDIFYING DEVICE AND A HEAT EXCHANGER
MOTEUR A COMBUSTION INTERNE A DISPOSITIF D'HUMIDIFICATION ET ECHANGEUR THERMIQUE

(30) Priorität: 09.03.2004 DE 102004011266
(43) Veröffentlichungstag der Anmeldung: 06.12.2006
(73) Patentinhaber: Munters Euroform GmbH, 52072 Aachen (DE)
(72) Erfinder: WETTERGARD, Jan, S-196 31 Kungsängen (SE)
(74) Vertreter: Hauck Patent- und Rechtsanwälte
(86) Internationale Anmeldenummer: PCT/DE2005/000367
(87) Internationale Veröffentlichungsnummer: WO 2005/088113

(56) Entgegenhaltungen:
- WO-A-02/075141
- WO-A-03/031795
- DE-A1- 2 738 807
- US-A- 4 192 266
- US-B1- 6 347 605

## Beschreibung

Die vorliegende Erfindung betrifft eine Brennkroptmaschine mit den Meskmalen des Oberbepripfs ven Palentemspuch 1.

Aus der WO 02/075141 A1 ist eine Brennkraftmaschine bekannt, bei das die Einlassluft befeuchtet wird, um auf diese Weise den NOx-Anteil im Abgas zu reduzieren. Der der Befeuchtungseinrichtung vorgeschaltete Wärmetauscher dient zum Vorerhitzen der Einlassluft, um auf diese Weise eine optimale Befeuchtung zu erreichen. Bei dem Wärmetauscher handelt es sich um einen Luft/Flüssigkeits-Wärmetauscher, der in einen Flüssigkeitskreis geschaltet ist, in welchem ein weiterer Wärmetauscher angeordnet ist, mit dem die der Brennkraftmaschine zugeführte befeuchtete und vom Kompressor komprimierte Einlassluft gekühlt wird. Bei dem weiteren Wärmetauscher handelt es sich somit um einen Ladeluftkühler.

In der vorstehend erwähnten Veröffentlichung sind zwei Ausführungsformen offenbart, bei denen die Einlassluft zwei hintereinander geschaltete Befeuchtungseinrichtungen passiert, denen jeweils ein Wärmetauscher vorgeschaltet ist. Hierbei handelt es sich bei dem der zweiten Befeuchtungseinrichtung um den vorstehend beschriebenen Wärmetauscher, der von dem Flüssigkeitskreis durchflossen wird, in dem der Ladeluftkühler angeordnet ist. Der der in Strömungsrichtung der Einlassluft angeordneten ersten Befeuchtungseinrichtung vorgeschaltete Wärmetauscher ist in einen Flüssigkeitskreis geschaltet, der entweder über einen weiteren Wärmetauscher zum Kühlen des im Kühlmittelkreis der Brennkraftmaschine fließenden Kühlmittels dient oder direkt vom Kühlmittel der Brennkraftmaschine durchflossen wird. Auf diese Weise soll das heiße Kühlmittel Wärmeenergie zur Vorerhitzung der Einlassluft abgeben. Bei beiden Ausführungsformen sind somit zwei getrennte Flüssigkeitskreise vorgesehen, wobei der eine zum Kühlen der Ladeluft und der andere zum Kühlen des Kühlmittels der Brennkraftmaschine dient.

Aus der WO 03/031795 A ist eine mit einem Turbolader versehene, einen Kühlmittelkreis aufweisende Brennkraftmaschine mit den Merkmalen des Oberbegriffes von Patentanspruch 1 bekannt. Die bekannte Brennkraftmaschine weist einen in Strömungsrichtung der Einlassluft stromauf der Befeuchtungseinrichtung angeordneten, zum Vorerhitzen der Einlassluft dienenden Wärmetauscher auf, der von der atmosphärischen Einlassluft durchströmt wird und in einen Flüssigkeitskreis geschaltet ist, in den der Kühlmittelkreis der Brennkraftmaschine integriert ist, wobei der zum Vorerhitzen der Einlassluft dienenden Wärmetauscher vom Kühlmittel der Brennkraftmaschine durchflossen wird und dieses kühlt.

Der vorliegenden Erfindung liegt die Aufgabe zugrunde, eine Brennkraftmaschine der angegebenen Art zu schaffen, die besonders einfach ausgebildet und wirtschaftlich zu betreiben ist.

Diese Aufgabe wird erfindungsgemäß bei einer Brennkraftmaschine der angegebenen Art durch die kennzeichnen dem Merkmale von Patentanspruch 1 gelöst.

Die erfindungsgemäße Lösung sieht zum Vorerhitzen der Einlassluft für den nachfolgenden Befeuchtungsvorgang einen einzigen Flüssigkeitskreis vor, in den der Kühlmittelkreis der Brennkraftmaschine integriert ist. Mit anderen Worten, dieser Flüssigkeitskreis enthält den weiteren Wärmetauscher (Ladeluftkühler) und dient somit zum Kühlen der Ladeluft und enthält des weiteren den Kühlmittelkreis der Brennkraftmaschine, so dass hierbei das Kühlmittel der Brennkraftmaschine die im Flüssigkeitskreis enthaltene Flüssigkeit bildet und den Wärmetauscher, den weiteren Wärmetauscher (Ladeluftkühler) sowie den Mantel der Brennkraftmaschine zum Kühlen derselben durchströmt. Da somit nur noch ein einziger Flüssigkeitskreis vorhanden ist, wird der Aufbau der Brennkraftmaschine vereinfacht. Des weiteren kann auf herkömmliche Kühleinrichtungen im Kühlmittelkreis der Brennkraftmaschine, wie beispielsweise den üblichen Kühler (Radiatorkühler), verzichtet werden, da das Kühlmittel im in der Befeuchtungseinrichtung vorgeschalteten Wärmetauscher in ausreichender Weise gekühlt wird. Es können daher aufwendige Gebläseeinrichtungen, wie sie bei herkömmlichen Kühlern für das Kühlmittel von Brennkraftmaschinen Verwendung finden, in Fortfall kommen.

So weist bei einer besonders bevorzugten Ausführungsform der Erfindung der Flüssigkeitskreis, in den der Kühlmittelkreis der Brennkraftmaschine integriert ist, keinen weiteren Kühler zum Kühlen des Kühlmittels auf. Ein herkömmlicher Radiatorkühler zum Kühlen des Kühlmittels, der sehr groß und aufwendig gestaltete Gebläseeinrichtungen besitzt, wird daher bei dieser Ausführungsform nicht benötigt. Die erforderliche Kühlung des Kühlmittels der Brennkraftmaschine wird allein vom Wärmetauscher der Befeuchtungseinrichtung bewirkt. Bei dieser Ausführungsform werden daher zwei wesentliche Verbesserungen erreicht: Zum einen wird durch die vorgesehene Befeuchtungseinrichtung für die Einlassluft der NOx-Anteil im Abgas gesenkt. Zum anderen sorgt der Wärmetauscher der Befeuchtungseinrichtung für die Kühlung des Kühlmittels der Brennkraftmaschine, so dass ein herkömmlicher Radiatorkühler entfallen kann.

Bei einer anderen bevorzugten Ausführungsform weist der Flüssigkeitskreis, in den der Kühlmittelkreis der Brennkraftmaschine integriert ist, einen Hilfskühler zum Kühlen des Kühlmittels auf. Ein derartiger Hilfskühler zum Kühlen des Kühlmittels kann dem Flüssigkeitskreis auch zugeschaltet werden. Es versteht sich, dass der Hilfskühler wesentlich kleiner dimensioniert und mit wesentlich kleineren Gebläseeinrichtungen versehen sein kann als ein herkömmlicher Radiatorkühler, der ausschließlich zum Kühlen des Kühlmittels verwendet wird. Solche Hilfskühler können daher einen sehr kleinen Ventilator bzw. ein sehr kleines Gebläse besitzen, oder es kann auf bereits vorhandene Gebläseeinrichtungen zurückgegriffen werden, wie sie beispielsweise bei stationären Stromerzeugungsanlagen bereits vorhanden sind (integriertes Gebläse im Generator).

In jedem Fall übernimmt bei der erfindungsgemäßen Lösung der der Befeuchtungseinrichtung vorgeschaltete Wärmetauscher entweder vollständig oder überwiegend die Aufgabe der Kühlung des Kühlmittels der Brennkraftmaschine, und zusätzlich vorgesehene Kühleinrichtungen für das Kühlmittel haben nur Hilfsfunktionen.

In Weiterbildung der Erfindung ist ein Ölkühler im Flüssigkeitskreis, in den der Kühlmittelkreis der Brennkraftmaschine integriert ist, angeordnet. Bei dieser Ausführungsform übernimmt daher der Flüssigkeitskreis des Wärmetauschers der Befeuchtungseinrichtung neben der Kühlfunktion für das Kühlmittel der Brennkraftmaschine und der Kühlfunktion für die Ladeluft die Funktion einer Motor- bzw. Getriebeölkühlung.

Bei einer anderen Ausführungsform der Erfindung ist der zum Kompressor führende Lufteinlasskanal in zwei Zweigkanäle aufgeteilt, von denen einer die Befeuchtungseinrichtung und den Wärmetauscher enthält und der andere direkt mit der Atmosphäre in Verbindung steht, und ist eine Schaltvorrichtung zum Verbinden des einen oder anderen Zweigkanales mit dem Kompressor vorgesehen. Diese Ausführungsform ermöglicht in bezug auf die Zuführung der Einlassluft zum Kompressor zwei Varianten. Bei der ersten Variante strömt die Einlassluft über den Wärmetauscher zum Vorerhitzen und die Befeuchtungseinrichtung zum Kompressor, wird daher vor dem Komprimieren befeuchtet. Bei der zweiten Variante strömt die Einlassluft über den anderen Zweigkanal direkt zum Kompressor und wird hierbei nicht vorerhitzt und befeuchtet. Je nach Wunsch kann daher durch Betätigung der Schaltvorrichtung (Schieber, Klappe, Ventil etc.) der eine oder andere Weg für die Einlassluft gewählt werden. Gelangt die Einlassluft über den den Wärmetauscher zum Vorerhitzen und die Befeuchtungseinrichtung enthaltenden Zweigkanal zum Kompressor, erfolgt eine Kühlung des Kühlmittels in der vorstehend beschriebenen Weise. Gelangt die Einlassluft über den anderen Zweigkanal direkt aus der Atmosphäre zum Kompressor, würde eine derartige Kühlung des Kühlmittels nicht erfolgen, da der Kompressor hierbei keine den Wärmetauscher passierende Einlassluft ansaugt. Um auch für diesen Fall eine Kühlung des Kühlmittels der Brennkraftmaschine zu erreichen (ohne dass diese einen herkömmlichen Radiatorkühler aufweisen muss), ist erfindungsgemäß ein Gebläse vorgesehen, das die Einlassluft durch den Wärmetauscher und die Befeuchtungseinrichtung fördert und wieder an die Atmosphäre abgibt. Hierbei wird somit die befeuchtete Einlassluft nicht der Brennkraftmaschine zugeführt, sondern einfach wieder an die Atmosphäre abgegeben. Durch die umgewälzte Einlassluft wird allerdings das den Wärmetauscher der Befeuchtungseinrichtung passierende Kühlmittel gekühlt. Das hierfür benötigte Gebläse kann wesentlich kleiner dimensioniert sein als die erwähnten herkömmlichen Gebläse von Radiatorkühlern.

Die zuletzt beschriebene Ausführungsform arbeitet beispielsweise bei normaler Last (>20 %) auf erfindungsgemäße Weise, gemäß der befeuchtete Einlassluft dem Kompressor zugeführt wird. Das zusätzlich vorgesehene Gebläse zur Abgabe der Einlassluft an die Atmosphäre ist dabei ausgeschaltet. Bei niedriger Last (<20 %) wird über die vorhandene Schaltvorrichtung umgeschaltet, so dass der Kompressor direkt Einlassluft ohne Passieren der Befeuchtungseinrichtung über den anderen Zweigkanal ansaugt. Hierbei wird das zusätzliche Gebläse eingeschaltet, so dass Luft über den Wärmetauscher und die Befeuchtungseinrichtung angesaugt und wieder zur Atmosphäre abgegeben wird, so dass auch bei niedriger Last eine Kühlung des Kühlmittels erfolgt, ohne dass hierbei auf großdimensionierte herkömmliche Gebläsekühler zurückgegriffen werden muss.

In Weiterbildung der Erfindung weist die Befeuchtungseinrichtung mehrere hintereinander geschaltete Befeuchtungseinheiten auf, denen jeweils ein Wärmetauscher vorgeschaltet ist, wobei die Wärmetauscher in den Flüssigkeitskreis geschaltet sind. Dabei sind die Wärmetauscher vorzugsweise parallel zueinander in den Flüssigkeitskreis geschaltet. Der Flüssigkeitskreis hat daher bei dieser Ausführungsform Verzweigungsstellen, von denen Zweigleitungen zu den jeweiligen Wärmetauschern führen. Entsprechende Zweigleitungen führen von den jeweiligen Wärmetauschern bis zu Verzweigungsstellen des Flüssigkeitskreises zurück.

Wie erwähnt, wird der Flüssigkeitskreis vom Kühlmittelkreis der Brennkraftmaschine durchflossen. Da es sich hierbei um Kühlwasser mit oder ohne entsprechende Zusätze handelt, ist der Flüssigkeitskreis als Wasserkreis ausgebildet.

Einzelheiten in bezug auf die Funktionsweise der Befeuchtungseinrichtung sowie des zugehörigen Wärmetauschers (Vorerhitzers) sind in der eingangs erwähnten WO 02/075141 A1 erläutert. Die Offenbarung dieser Veröffentlichung wird daher für die vorliegende Anmeldung übernommen, ohne dass hier jede Einzelheit nochmals offenbart wird.

Wie erwähnt, wird die vom Kompressor kommende komprimierte und befeuchtete Einlassluft im weiteren Wärmetauscher (Ladeluftkühler) gekühlt. Eine derartige Kühlung ist erwünscht, wobei jedoch eine Kondensation der komprimierten und befeuchteten Luft vermieden werden muss. Dies wird vorzugsweise so erreicht, dass der Flüssigkeitskreis ein Bypassventil und eine Bypassleitung aufweist, die eine Rückführung der vom Wärmetauscher kommenden Flüssigkeit (Kühlmittel der Brennkraftmaschine) zu demselben ohne Passieren des weiteren Wärmetauschers ermöglichen. Stellt beispielsweise ein Sensor fest, dass eine weitere Abkühlung der komprimierten und befeuchteten Einlassluft zu einer Kondensation führen würde, wird das Bypassventil geöffnet und die vom Wärmetauscher kommende Flüssigkeit zum Wärmetauscher teilweise zurückgeführt, ohne den weiteren Wärmetauscher zu passieren. Der Flüssigkeitskreis wird daher teilweise kurzgeschlossen, was zur Folge hat, dass die befeuchtete und komprimierte Einlassluft im weiteren Wärmetauscher (Ladeluftkühler) weniger abgekühlt wird. Durch Schließen des Bypassventiles kann der Flüssigkeitskreis wieder im Normalbetrieb betrieben werden. Mit dem Bypassventil kann somit die Kühlung der befeuchteten und komprimierten Einlassluft reguliert werden.

Die erfindungsgemäße Lösung zeichnet sich durch einen besonders einfachen Aufbau aus, da es relativ unkompliziert ist, einen einzigen Flüssigkeitskreis vorzusehen, in den der Kühlmittelkreis der Brennkraftmaschine integriert bzw. an den der Kühlmittelkreis der Brennkraftmaschine angeschlossen ist. In diesem Kreis sind zwei (oder mehrere) im Prinzip gleiche Wärmetauscher im Abstand voneinander zu installieren und über einen Flüssigkeitskreis (Wasserkreis) miteinander zu verbinden. Hierzu ist lediglich ein Flüssigkeitsrohrsystem mit einer Pumpe erforderlich.

Den Wärmetauschern bzw. Befeuchtungseinrichtungen können entsprechende Tropfenabscheider nachgeschaltet sein.

Bei der erfindungsgemäßen Brennkraftmaschine handelt es sich vorzugsweise um Dieselmotoren, die stationär oder in Fahrzeugen angeordnet sind. Stationäre Anlagen werden vorzugsweise zur Stromerzeugung verwendet. Hierbei kann der ohnehin für den Generator vorgesehene Ventilator zum Kühlen der Kühlflüssigkeit der Brennkraftmaschine verwendet werden, während der großdimensionierte Radiator- bzw. Gebläsekühler entfallen kann. Dies ist auch bei Industriemotoren oder sonstigen Motoren der Fall, so dass insgesamt eine beträchtliche Kosten- und Raumersparnis erzielt werden kann.

Die Erfindung wird nachfolgend anhand von Ausführungsbeispielen in Verbindung mit der Zeichnung im einzelnen erläutert. Es zeigen:
- Figur 1: eine schematische Darstellung eines mit einem Turbolader versehenen Dieselmotors, der einen herkömmlichen Gebläsekühler für das Kühlwasser aufweist;
- Figur 2: eine schematische Ansicht einer ersten Ausführungsform eines erfindungsgemäß ausgebildeten Dieselmotors mit in den Flüssigkeitskreis des Wärmetauschers der Befeuchtungseinrichtung integriertem Kühlmittelkreis; und
- Figur 3: eine schematische Ansicht einer weiteren Ausführungsform eines mit einem Turbolader versehenen Dieselmotors, der zwei Zweigkanäle zur Einführung der Einlassluft aufweist.

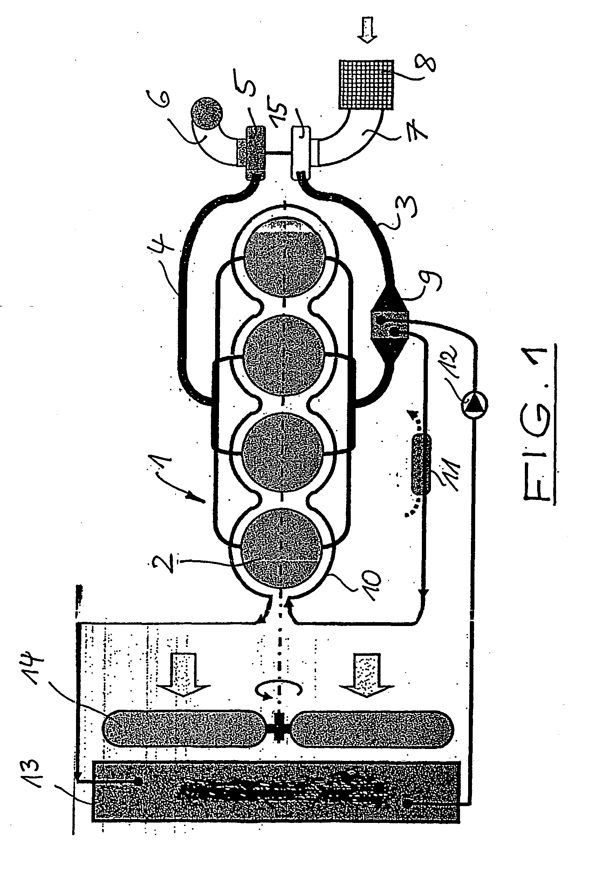

Figur 1 zeigt in schematischer Ansicht einen herkömmlich ausgebildeten, mit einem Turbolader versehenen Dieselmotor 1. Die zur Durchführung des Verbrennungsvorganges benötigte Einlassluft gelangt über einen Luftfilter 8 und einen Ansaugkrümmer 7 in einen Kompressor 15 des Turboladers und wird dort verdichtet. Vom Kompressor 15 gelangt die komprimierte und dadurch erhitzte Einlassluft über ein Einlassrohr 3 zum Zylinderblock, wo sie den einzelnen Zylindern 2 (hier sind vier Zylinder dargestellt) zugeführt wird. Auf dem Weg zum Zylinderblock passiert die komprimierte und erhitzte Einlassluft einen Ladeluftkühler 9, in dem sie gekühlt wird. Bei dem Ladeluftkühler 9 handelt es sich um einen Luft/Flüssigkeits-Wärmetauscher, dessen Flüssigkeitskreis vom Kühlmittel des Motors durchflossen wird.

Die durch die Verbrennung erzeugten Abgase strömen über ein Auslassrohr 4 zu einem Auslasskrümmer 6 und werden an die Atmosphäre abgegeben. Dabei treiben sie eine Turbine 5 des Turboladers an, deren Welle den Kompressor 15 antreibt.

Der Kühlmittelkreis des Motors ist bei 10 nur schematisch angedeutet. In den Kühlmittelkreis ist ein üblicher Kühler 13 geschaltet, der zur Kühlung des Kühlmittels von einem Gebläse 14 beaufschlagt wird. Eine Pumpe 12 wälzt das Kühlmittel im Kühlmittelkreis um, in den des weiteren ein bei 11 gezeigter Ölkühler geschaltet ist.

Bei diesem herkömmlich ausgebildeten Dieselmotor wird somit das Kühlmittel durch einen aufwendig ausgebildeten Kühler mit Gebläse 14 gekühlt.

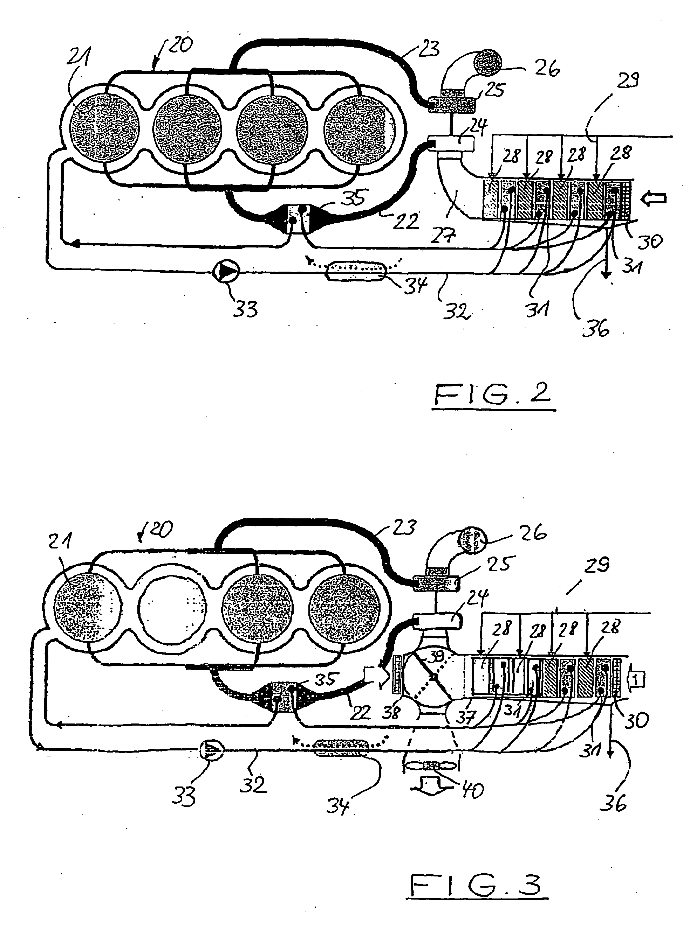

Figur 2 zeigt in schematischer Weise eine erste Ausführungsform eines erfindungsgemäß ausgebildeten Dieselmotors 20, bei dem die Einlassluft befeuchtet wird und der keinen herkömmlich ausgebildeten Kühler mit Gebläse zum Kühlen des Kühlmittels aufweist. Bei dieser Ausführungsform passiert die Einlassluft einen Luftfilter 30 und vier stufenweise hintereinandergeschaltete Befeuchtungseinheiten 28, denen jeweils ein Wärmetauscher 31 vorgeschaltet ist. Der vorgeschaltete Wärmetauscher 31 dient zum Erwärmen der Einlassluft, damit diese in der nachfolgenden Befeuchtungseinheit 28 auf optimale Weise mit Feuchtigkeit beaufschlagt werden kann. Der Aufbau einer derartigen Befeuchtungseinheit ist aus der eingangs erwähnten WO 02/075141 A1 sowie dem darin angegebenen Stand der Technik bekannt und wird daher an dieser Stelle nicht mehr im einzelnen beschrieben. Jedenfalls kann es sich hierbei um Rieselbefeuchter handeln, die von oben nach unten mit Wasser (Süßwasser, Salzwasser) durchströmt werden, wobei das Wasser über geeignete Rieselbefeuchtungseinrichtungen auf ein Füllkörperbett gesprüht wird. Der Rieselbefeuchter wird in Querrichtung von der Einlassluft durchströmt, wobei diese entsprechende Feuchtigkeit auf adiabatische Weise aufnimmt. Die Wasserzuführung für die Befeuchtungseinheiten ist bei 29 angedeutet.

Die vorerwärmte und befeuchtete Einlassluft gelangt über den Ansaugkrümmer 27 in einen Kompressor 24 eines Turboladers und wird dort komprimiert. Sie wird dann über das Einlassrohr 22 dem Zylinderblock zugeführt und auf die einzelnen Zylinder 21 verteilt. Im Einlassrohr 22 befindet sich ein Ladeluftkühler 35, bei dem es sich um einen Luft/ Flüssigkeits-Wärmetauscher handelt, der vom Kühlmittel des Motors durchströmt wird.

Das vom Dieselmotor erzeugte Abgas gelangt über ein Auslassrohr 23 und eine Turbine 25 des Turboladers zu einem Auslasskrümmer 26 und wird in die Atmosphäre abgegeben. Die Turbine 25 treibt den Kompressor 24 des Turboladers an.

Bei dieser Ausführungsform bilden der Kühlmittelkreis des Dieselmotors sowie der Flüssigkeitskreis der zum Vorerhitzen der Einlassluft dienenden Wärmetauscher 31 einen einheitlichen Kreis 32, der vom Kühlmittel (Kühlwasser) des Motors durchströmt wird. Das Kühlmittel wird dabei im Wärmetauscher 31 (den hier dargestellten vier Wärmetauschereinheiten) in ausreichender Weise abgekühlt, so dass ein zusätzlicher Kühler für das Kühlmittel nicht benötigt wird und ein herkömmlicher Kühler wie bei der in Figur 1 dargestellten Ausführungsform entfallen kann. In diesem einzigen Kreis 32 wird das Kühlmittel mit Hilfe einer Pumpe 33 umgewälzt. In den Kreis sind der erwähnte Ladeluftkühler 35 sowie des weiteren ein Ölkühler 34 geschaltet. Die einzelnen Wärmetauschereinheiten des Wärmetauschers 31 sind parallel zueinander geschaltet.

Wenn im Betrieb des Dieselmotors vom Kompressor 24 Einlassluft angesaugt wird, passiert diese die vier Einheiten des Wärmetauschers 31 und wird dadurch erhitzt. Dabei wird dem im Kreis 32 umgewälzten Kühlmittel des Motors Wärme entzogen, so dass dieses abgekühlt wird. Das die Wärmetauschereinheiten verlassende Kühlmittel strömt durch den Ladeluftkühler 35 und entzieht dabei der befeuchteten und komprimierten Einlassluft Wärme, die abgekühlt wird. Das geringfügig erwärmte Kühlmittel gelangt dann in den Kühlmittelmantel des Motors und wird durch Aufnahme der Verbrennungswärme weiter erhitzt. Es durchströmt den Ölkühler 34, wobei nochmals eine Erhitzung folgt, bis das Kühlmittel dann in den einzelnen Einheiten des Wärmetauschers 31 wieder abgekühlt wird.

Figur 3 zeigt eine schematische Ansicht einer weiteren Ausführungsform eines erfindungsgemäß ausgebildeten Dieselmotors. Der Grundaufbau des Motors ist der gleiche wie bei der Ausführungsform der Figur 2. Bei dieser Ausführungsform wird zwischen zwei Betriebszuständen unterschieden. Bei geringer Last (<20 %) wird die dem Motor zugeführte Einlassluft nicht befeuchtet, während sie bei Normallast (>20 %) befeuchtet wird. Um dies zu erreichen, ist der Lufteinlasskanal in zwei Zweigkanäle aufgeteilt, wobei sich an der Aufteilungsstelle eine Schalteinrichtung 39, beispielsweise ein Schieber, eine Klappe, ein Ventil etc., befindet, mit der der jeweilige Zweigkanal freigegeben und der andere Kanal gesperrt werden kann. Wenn beispielsweise der dargestellte Dieselmotor 20 unter Normallast arbeitet, hat die Schaltvorrichtung 39 die in Figur 3 mit durchgezogener Linie gezeigte Stellung, in der der sich in der Figur nach rechts erstreckende Zweigkanal für die Einlassluft mit dem Kompressor 24 des Turboladers verbunden wird. Die angesaugte Einlassluft wird daher wie bei der Ausführungsform der Figur 2 über vier Einheiten eines Wärmetauschers 31 vorerhitzt und in vier Befeuchtungseinheiten 28 befeuchtet. Die vorerhitzte und befeuchtete Einlassluft gelangt dann in den Kompressor 24 und wird dem Motor über den Ladeluftkühler 35 zugeführt. In diesem Betriebszustand funktioniert der Motor der Ausführungsform der Figur 3 daher in der gleichen Weise wie der Motor der Ausführungsform der Figur 2. Die Einheiten des Wärmetauschers 31 werden vom Kühlmittel des Motors durchströmt, das hierin abgekühlt wird, ohne dass ein zusätzlicher Kühler für das Kühlmittel benötigt wird.

Wenn der Motor bei geringer Last arbeitet, beispielsweise im Leerlauf, kann eine Befeuchtung der Einlassluft nicht erforderlich sein. In diesem Fall wird daher die Schaltvorrichtung 39 auf die in Figur 3 punktiert dargestellte Stellung umgeschaltet, so dass nunmehr der sich in der Figur nach links erstreckende Zweigkanal 38 in Verbindung mit dem Kompressor 24 gebracht wird. Die Einlassluft wird daher über den Zweigkanal 38 angesaugt und gelangt ohne Erhitzung und Befeuchtung zum Kompressor 24. Der Motor arbeitet daher in diesem Betriebszustand nicht mit befeuchteter Einlassluft.

Bei der in Figur 3 dargestellten Ausführungsform ist der Dieselmotor mit einem zusätzlichen kleindimensionierten Gebläse (Ventilator) 40 versehen, der bei der in Figur 3 punktiest gezeigten Stellung der Schaltvorrichtung 39 Einlassluft durch den ersten Zweigkanal 37 zieht, welcher die entsprechenden Einheiten des Wärmetauschers 31 und Befeuchtungseinheiten 28 aufweist. Im Zustand niedriger Last wird somit Einlassluft angesaugt, jedoch nicht dem Kompressor 24 zugeführt, sondern über einen in Figur 3 gestrichelt dargestellten Zweigkanal ungenutzt zur Atmosphäre abgeführt. Hierdurch wird das im Kreis 32 über die Pumpe 33 umgewälzte Kühlmittel des Motors, das die entsprechenden Einheiten des Wärmetauschers 31 passiert, gekühlt, so dass auch im Zustand niedriger Last eine Kühlmittelkühlung stattfindet, wenn auch nicht in dem Ausmaß wie im Zustand normaler Last.

Ergänzend sei noch darauf hingewiesen, dass die Befeuchtungseinheiten 28 und Einheiten des Wärmetauschers 31 in einer Wanne angeordnet sind, die einen bei 36 angedeuteten Abfluss aufweist. Auf diese Weise wird überschüssige Flüssigkeit, die zum Befeuchten verwendet wird, abgeführt.

Die über den Zweigkanal 38 zugeführte Einlassluft passiert ebenfalls einen Luftfilter.

Insgesamt arbeitet der erfindungsgemäße Motor somit mit einem einzigen Flüssigkeitskreis, der einerseits die Aufgabe hat, die Einlassluft vorzuerwärmen, und andererseits das zum Kühlen des Motors verwendete Kühlmittel kühlt. Hierdurch kann ein aufwendig gestalteter herkömmlicher Kühler mit Gebläse entfallen, so dass eine wesentliche Kostenersparnis erzielt wird. Dies schließt natürlich nicht aus, dass zusätzliche Kühler zum Kühlen des Kühlmittels vorhanden sind, die jedoch infolge der durch den Wärmetauscher 31 erreichten Kühlung geringer dimensioniert werden können als bei herkömmlichen Ausführungsformen.

Wenn vorstehend von einem Kühlmittelkreis und einem Flüssigkeitskreis die Rede ist, so schließt dies natürlich nicht aus, dass die Brennkraftmaschine auch mehrere gekoppelte Kühlmittel/Flüssigkeitskreise aufweisen kann.

## Patentansprüche

1. Mit einem Turbolader versehene, einen Kühlmittelkreis aufweisende Brennkraftmaschine (20) mit einer Befeuchtungseinrichtung (28) zum Befeuchten der Einlassluft der Brennkraftmaschine (20), durch die die Einlassluft und eine Befeuchtüngsflüssigkeit strömen und miteinander in Kontakt treten und die in Strömungsrichtung der Einlassluft stromauf des Kompressors (24) des Turboladers angeordnet ist, und einem in Strömungsrichtung der Einlassluft stromauf der Befeuchtungseinrichtung (28) angeordneten, zum Vorerhitzen der Einlassluft dienenden Wärmetauscher (31), der von der atmosphärischen Einlassluft durchströmt wird und in einen Flüssigkeitskreis (2) geschaltet ist, in den der Kühlmittelkreis /3 der Brennkraftmaschine (20) integriert ist, wobei der zum Vorerhitzen der Einlassluft dienende Wärmetauscher (31) vom Kühlmittel der Brennkraftmaschine (20) durchflossen wird und dieses kühlt, **dadurch gekennzeichnet, dass** die Brennkraftmaschine (20) im Strömungsweg der Einlassluft stromab des Kompressors (24) einen weiteren Wärmetauscher (35) (Ladeluftkühler) zum Kühlen der komprimierten und befeuchteten Einlassluft aufweist und dass sich der weitere Wärmetauscher (35) (Ladeluftkühler) im Flüssigkeitskreis (32) befindet.

2. Brennkraftmaschine nach Anspruch 1, **dadurch gekennzeichnet, dass** der Flüssigkeitskreis (32), in den der Kühlmittelkreis integriert ist, keinen weiteren Kühler zum Kühlen des Kühlmittel aufweist.

3. Brennkraftmaschine nach Anspruch 1, **dadurch gekennzeichnet, dass** der Flüssigkeitskreis (32), in den der Kühlmittelkreis integriert ist, einen Hilfskühler zum Kühlen des Kühlmittels aufweist.

4. Brennkraftmaschine nach Anspruch 1, **dadurch gekennzeichnet, dass** dem Flüssigkeitskreis (32), in den der Kühlmittelkreis integriert ist, ein Hilfskühler zum Kühlen des Kühlmittels zuschaltbar ist.

5. Brennkraftmaschine nach einem der vorangehenden Ansprüche, **dadurch gekennzeichnet, dass** im Flüssigkeitskreis (32), in den der Kühlmittelkreis integriert ist, ein Ölkühler (34) angeordnet ist.

6. Brennkraftmaschine nach einem der vorangehenden Ansprüche, **dadurch gekennzeichnet, dass** der zum Kompressor (24) führende Lufteinlasskanal in zwei Zweigkanäle (37, 38) aufgeteilt ist, von denen einer (37) die Befeuchtungseinrichtung (28) und den Wärmetauscher (31) enthält und der andere (38) direkt mit der Atmosphäre in Verbindung steht, und dass eine Schaltvorrichtung (39) zum Verbinden des einen oder anderen Zweigkanales (37, 38) mit dem Kompressor (24) vorgesehen ist.

7. Brennkraftmaschine nach einem der vorangehenden Ansprüche, **dadurch gekennzeichnet, dass** sie ein Gebläse (40) aufweist, das die Einlassluft durch den Wärmetauscher (31) und die Befeuchtungseinrichtung (28) fördert.

8. Brennkraftmaschine nach Anspruch 7, **dadurch gekennzeichnet, dass** das Gebläse (40) die Einlassluft, die den Wärmetauscher (31) passiert hat, zur Atmosphäre abführt.

9. Brennkraftmaschine nach einem der vorangehenden Ansprüche, **dadurch gekennzeichnet, dass** die Befeuchtungseinrichtung (28) mehrere hintereinander geschaltete Befeuchtungseinheiten aufweist, denen jeweils eine Einheit des Wärmetauschers (31) vorgeschaltet ist.

10. Brennkraftmaschine nach Anspruch 9, **dadurch gekennzeichnet, dass** die Einheiten des Wärmetauschers (31) parallel zueinander in den Flüssigkeitskreis (32) geschaltet sind.

## Claims

1. An internal combustion engine (20) provided with a turbocharger and having a cooling agent circuit, said internal combustion engine comprising a humidifying device (28) for humidifying the inlet air of the internal combustion engine (20) through which the inlet air and a humidifying liquid flow and come into contact with one another and which is disposed upstream of the compressor (24) of the turbocharger in flow direction of the inlet air, and a heat exchanger (31) disposed upstream of the humidifying device (28) in flow direction of the inlet air and serving for preheating the inlet air, said heat exchanger (31) being flown through by the atmospheric inlet air and being disposed in a liquid circuit (32) into which the cooling agent circuit of the internal combustion engine (20) is integrated, wherein the heat exchanger (31) serving for preheating the inlet air is flown through by the cooling agent of the internal combustion engine (20) and cools the same, **characterized in that** the internal combustion engine (20) includes another heat exchanger (35) (charging air cooler) for cooling the compressed and humidified inlet air in the flow path of the inlet air downstream of the compressor (24) and **in that** the other heat exchanger (35) (charging air cooler) is disposed in the liquid circuit (32).

2. The internal combustion engine according to claim 1, **characterized in that** the liquid circuit (32) into which the cooling agent circuit is integrated has no further cooler for cooling the cooling agent.

3. The internal combustion engine according to claim 1, **characterized in that** the liquid circuit (32) into which the cooling agent circuit is integrated has an auxiliary cooler for cooling the cooling agent.

4. The internal combustion engine according to claim 1, **characterized in that** an auxiliary cooler for cooling the cooling agent can be switched to the liquid circuit (32) into which the cooling agent circuit is integrated.

5. The internal combustion engine according to one of the preceding claims, **characterized in that** an oil cooler (34) is disposed in the liquid circuit (32) into which the cooling agent circuit is integrated.

6. The internal combustion engine according to one of the preceding claims, **characterized in that** the air inlet channel leading to the compressor (24) is divided into two branch channels (37, 38) one (37) of which containing the humidifying device (28) and the heat exchanger (31) and the other (38) being connected directly with the atmosphere, and **in that** a switching device (39) for connecting the one or other branch channel (37, 38) with the compressor (24).

7. The internal combustion engine according to one of the preceding claims, **characterized in that** it includes a fan (40) conducting the inlet air through the heat exchanger (31) and the humidifying device (28).

8. The internal combustion engine according to claim 7, **characterized in that** the fan (40) leads away the inlet air having passed the heat exchanger (31) to the atmosphere.

9. The internal combustion engine according to one of the preceding claims, **characterized in that** the humidifying device (28) includes several humidifying units disposed one behind the other and having predisposed a unit of the heat exchanger (31), respectively.

10. The internal combustion engine according to claim 9, **characterized in that** the units of the heat exchanger (31) are disposed parallel with respect to one another in the liquid circuit (32).

## Revendications

1. Moteur à combustion interne (20) présentant un circuit d'agent de refroidissement, pourvu d'un turbocompresseur avec un dispositif d'humidification (28) servant à humidifier l'air d'admission du moteur à combustion interne (20), dans lequel passent et entrent en contact l'air d'admission et un liquide d'humidification et qui est disposé dans le sens d'écoulement de l'air d'admission en amont du compresseur (24) du turbocompresseur, et un échangeur thermique (31) servant à préchauffer l'air d'admission, disposé dans le sens d'écoulement de l'air d'admission en amont du dispositif d'humidification (28), qui est traversé par l'air d'admission atmosphérique et est monté dans un circuit hydraulique (32), dans lequel le circuit d'agent de refroidissement du moteur à combustion interne (20) est intégré, l'échangeur thermique (31) servant à préchauffer l'air d'admission étant traversé par l'agent de refroidissement du moteur à combustion interne (20) et le refroidissant, **caractérisé en ce que** le moteur à combustion interne (20) présente dans le chemin d'écoulement de l'air d'admission en aval du compresseur (24) un autre échangeur thermique (35) (refroidisseur d'air de suralimentation) servant à refroidir l'air d'admission comprimé et humidifié et **en ce que** l'autre échangeur thermique (35) (refroidisseur d'air de suralimentation) se trouve dans le circuit hydraulique (32).

2. Moteur à combustion interne selon la revendication 1, **caractérisé en ce que** le circuit hydraulique (32), dans lequel le circuit d'agent de refroidissement est intégré, ne présente aucun autre refroidisseur servant à refroidir l'agent de refroidissement.

3. Moteur à combustion interne selon la revendication 1, **caractérisé en ce que** le circuit hydraulique (32), dans lequel le circuit d'agent de refroidissement est intégré, présente un refroidisseur auxiliaire servant à refroidir l'agent de refroidissement.

4. Moteur à combustion interne selon la revendication 1, **caractérisé en ce qu'**un refroidisseur auxiliaire servant à refroidir l'agent de refroidissement peut être monté dans le circuit hydraulique (32), dans lequel le circuit d'agent de refroidissement est intégré.

5. Moteur à combustion interne selon l'une quelconque des revendications précédentes, **caractérisé en ce qu'**un refroidisseur d'huile (34) est disposé dans le circuit hydraulique (32), dans lequel le circuit d'agent de refroidissement est intégré.

6. Moteur à combustion interne selon l'une quelconque des revendications précédentes, **caractérisé en ce que** le canal d'admission d'air menant au compresseur (24) est divisé en deux canaux de dérivation (37, 38), parmi lesquels l'un (37) contient le dispositif d'humidification (28) et l'échangeur thermique (31) et l'autre (38) est en liaison directe avec l'atmosphère, et **en ce qu'**un dispositif de commutation (39) est prévu pour relier l'un ou l'autre canal de dérivation (37, 38) au compresseur (24).

7. Moteur à combustion interne selon l'une quelconque des revendications précédentes, **caractérisé en ce qu'**il présente un ventilateur (40) qui transporte l'air d'admission par l'échangeur thermique (31) et le dispositif d'humidification (28).

8. Moteur à combustion interne selon la revendication 7, **caractérisé en ce que** le ventilateur (40) évacue l'air d'admission qui a passé l'échangeur thermique (31), vers l'atmosphère.

9. Moteur à combustion interne selon l'une quelconque des revendications précédentes, **caractérisé en ce que** le dispositif d'humidification (28) présente plusieurs unités d'humidification montées les unes derrière les autres, en amont desquelles est montée respectivement une unité de l'échangeur thermique (31).

10. Moteur à combustion interne selon la revendication 9, **caractérisé en ce que** les unités de l'échangeur thermique (31) sont montées parallèlement les unes aux autres dans le circuit hydraulique (32).
